# EUROPEAN PATENT APPLICATION

(11) **EP 4 254 404 A1**
(43) Date of publication of application: **04.10.2023**
(21) Application number: 20965335.1
(22) Date of filing: 14.12.2020
(51) Int. Cl.: G10L 19/005

(54) **DATA TRANSMISSION METHOD AND DATA TRANSMISSION DEVICE**

(71) Applicant: Huawei Technologies Co., Ltd., Shenzhen, Guangdong 518129 (CN)
(72) Inventor: LIU, Hang, Shenzhen, Guangdong 518129 (CN); CHENG, Xingqing, Shenzhen, Guangdong 518129 (CN); WANG, Jian, Shenzhen, Guangdong 518129 (CN)
(74) Representative: Gill Jennings & Every LLP
(86) International application number: PCT/CN2020/136107
(87) International publication number: WO 2022/126315

(57) **Abstract**

This application provides a data transmission method and device for an in-vehicle intelligent cockpit. Data and attribute information of the data that are from at least one data source is received at a transmitting end. The original data is segmented based on the attribute information to obtain a plurality of data sections. Respective check codes for the plurality of data sections are calculated based on each of the plurality of data sections. A plurality of coded blocks are sent. The plurality of coded blocks are received at a receiving end. A check is performed on data sections included in the plurality of coded blocks by using check codes included in the plurality of coded blocks. At least a data section that is successful in the check is provided for a user. Correspondingly, a data transmission system, a computer-readable storage medium, a computer program, and a vehicle are also provided. According to the technical solutions of this application, data transmission efficiency is greatly improved.

## Description

### TECHNICAL FIELD

This application relates to the field of network communication, and in particular, to a data transmission method and device.

### BACKGROUND

With the emergence of intelligent automobiles, vehicles are not only means of transportation, but also one of people's living spaces. Vehicles with network communication capabilities play an increasingly important role in people's daily life. Domain-based domain controller integration becomes a mainstream architecture of a vehicle control system. The vehicle control system is divided into a plurality of domains based on functions, such as a power train domain, a vehicle body electronics domain, an assisted driving domain, and a cockpit domain. Each domain is dominated by a corresponding domain controller, and the domain controller begins to become an important part of a network system in each area of the vehicle. To meet people's pursuit of personalized driving experience, people expect that a cockpit can provide people with richer entertainment, audio, video, and office experience, so that a cockpit domain service becomes an important business opportunity in the intelligent automobile field. Therefore, a network communication capability of the cockpit domain service of the vehicle urgently needs to be improved.

Currently, network connection devices in the cockpit domain mainly include a cockpit domain controller (cockpit domain controller, CDC, also referred to as an in-vehicle infotainment), a vehicle-mounted device like an audio and video device (for example, a speaker or a microphone) in the vehicle, an in-vehicle screen, and an intelligent terminal. The in-vehicle infotainment and the audio and video device in the vehicle are mainly connected in a wired manner. The wired connection manner is restricted by cable costs and in-vehicle cabling. With the development of technologies, a wireless connection between the CDC and another vehicle-mounted device gradually emerges. The CDC is responsible for scheduling a radio resource for the another vehicle-mounted device, so that communication between the vehicle-mounted device and the CDC is implemented. Common wireless technologies include wireless communication technologies such as Bluetooth, Wi-Fi, and cellular networks.

In a cockpit environment, there are abundant service types, including a data service with large packets like a streaming media service and a periodic service with a small packet like an active noise reduction service.

Vehicle-mounted active noise reduction is to neutralize engine noise, road noise, wind noise, and other noise by emitting a reverse acoustic signal from an interior speaker, to realize an overall or regional static field in the interior of the vehicle, and eliminate or reduce the noise in the vehicle. Specifically, a plurality of in-vehicle microphones need to collect in-vehicle noise signals, transmit the in-vehicle noise signals to a processor unit to generate reverse noise signals, and then transmit the reverse noise signals to a plurality of in-vehicle speakers for separate playing, to implement an active noise reduction effect at a cockpit receiving end. To ensure that reverse noise and real noise cancel each other, and ensure that a noise reduction system can work stably, a delay of collecting, processing, and transmitting the noise, generating the reverse noise signal, transmitting the reverse noise signal to the in-vehicle speaker for playing, and receiving the reverse noise signal by the cockpit receiving end (for example, a human ear) needs to be less than a delay of transmitting the real noise to the cockpit receiving end for playing, and transmission of the noise signal and the reverse noise signal needs to meet high reliability.

In a vehicle-mounted environment, a microphone array can be used to ensure performance. That is, a single microphone array includes a plurality of microphones, and the single microphone array aggregates data from the plurality of microphones, and sends the data to the CDC for processing.

Active noise reduction array service data is considered as a data packet, and cyclic redundancy check (Cyclic redundancy check, CRC check) is performed at a media access control (Media Access Control, MAC) layer. At the receiving end, when a specific bit in the data packet has a transmission error, and fails the CRC check at the MAC layer, the entire data packet is discarded. For example, when data of N array elements exists in one microphone array, and an error occurs in data of one of the array elements during access layer data transmission, the entire data packet including the N array elements is discarded. As a result, information transmission efficiency is low.

### SUMMARY

In view of the foregoing problems in the conventional technology, embodiments of this application provide a data transmission method and device, which can improve information transmission efficiency.

According to a first aspect, this application provides a data transmission method, used to transmit original data. The data transmission method includes: receiving original data and attribute information of the original data that are from at least one data source; segmenting the original data based on the attribute information to obtain a plurality of data sections; calculating respective check codes for the plurality of data sections based on each of the plurality of data sections; and sending the original data in a form of a plurality of coded blocks, where each coded block corresponds to one data section in the plurality of data sections, and includes the data section and a corresponding check code.

According to the foregoing aspect, the original data of the data source is further segmented based on the attribute information of the original data, and each data section is encoded and added with a check code for transmission. This reduces a risk that the original data is entirely discarded due to a transmission error of a specific bit. In addition, since each segmented data section can be associated with the attribute information, each data section has a possibility to correspond to the data source, so that data from different data sources can be transmitted without interference with each other, to improve transmission efficiency.

According to the first aspect, in a first possible implementation of the data transmission method, the segmenting the original data and the calculating respective check codes for the plurality of data sections are implemented at a physical layer in an access layer protocol stack for wireless communication.

The physical layer is implemented on a bottom-layer hardware device, and the bottom-layer hardware device has a strong processing capability and can perform various operations faster. Therefore, performing data segmentation and check code calculation at the physical layer can reduce time overheads of performing data segmentation and check code calculation, and improve data transmission efficiency.

According to the first aspect or the first possible implementation of the first aspect, in a second possible implementation of the data transmission method, the attribute information includes a quantity of quantization bits used by each of the at least one data source.

Quantization refers to rounding of continuous values (or a large set of possible discrete values) of a signal to a finite set of (or a small set of) discrete values. Generally, quantization is mainly applied to conversion from a continuous signal to a digital signal. A continuous signal becomes a discrete signal after sampling is applied, and the discrete signal becomes a digital signal after quantization is applied. A quantity of binary bits of a sampled value determines a quantization precision of the sampled value, and is also referred to as the quantity of quantization bits.

When the quantity of quantization bits used by each data source is different, the attribute information includes more than one quantity of quantization bits, and a quantity of bits of each of the plurality of data sections is the same as a quantity of quantization bits used by one of the at least one data source, so that each data section includes a complete data sample of one of the data sources. In this way, if there is a situation at a receiving end that some data sections are discarded because of failing a check, but other data sections are provided to a user because of being successful in the check, the user can obtain complete data of at least part of the data source for use.

When the quantity of quantization bits used by each data source is the same, a quantity of bits of each data section may be equal to the same quantity of quantization bits, so that storage and transmission of segmented data sections are more orderly, and each data section may have a one-to-one correspondence with the data source. This further enhances a correlation between each data section and the data source.

According to the first aspect or any implementation of the first aspect, in a third possible implementation of the data transmission method, the attribute information includes a sampling rate and a quantity of quantization bits used by each of the at least one data source.

It should be noted that the sampling rate, also referred to as a sampling frequency or a sampling speed, defines a quantity of samples per second taken from a continuous signal to make a discrete signal, and the sampling rate is represented by Hertz (Hz). A reciprocal of the sampling frequency is a sampling periodicity or sampling time, which is a time interval between two samples.

When the attribute information includes the sampling rate and the quantity of quantization bits used by each of the at least one data source, the quantity of bits of each of the plurality of data sections is a positive integer multiple of the quantity of quantization bits used by one of the at least one data source, or the quantity of quantization bits used by one of the at least one data source is a positive integer multiple of the quantity of bits of each of the data sections DSs.

When segmentation is performed based on a sampling rate and a quantity of quantization bits used by one of the data sources, a resource scheduling time interval can be further correlated with a sampling time interval. That is, a use frequency of a physical resource can be calculated based on the sampling rate. In this way, it is possible to dynamically adjust matching of the physical resource by using the sampling rate and the quantity of quantization bits, to improve utilization of the physical resource.

According to the first aspect or any implementation of the first aspect, in a fourth possible implementation of the data transmission method, the attribute information includes a quantity of the at least one data source.

When a sampling rate of each data source is the same and a quantity of quantization bits of each data source is the same, a quantity of data sources may be directly used as the attribute information, and equal division is performed only based on the quantity of data sources. In this case, a quantity of the plurality of data sections is a positive integer multiple of the quantity of the at least one data source, or the quantity of the at least one data source is a positive integer multiple of the quantity of the plurality of data sections. Therefore, a specific value of the sampling rate or a specific value of the quantity of quantization bits does not need to be transmitted. In addition, data includes data sections that can be directly divided into a same quantity of data sections based on the quantity of data sources, so that storage and transmission of segmented data sections are more orderly. This facilitates ease of resource allocation, and a specific data source from which each data section comes can be more clearly defined. This further enhances the correlation between each data section and the data source, so that an array element fault in a microphone array can also be detected by detecting an error in an associated data section.

According to the first aspect or any implementation of the first aspect, in a fifth possible implementation of the data transmission method, the attribute information includes at least quantity information of the plurality of data sections obtained by segmenting the original data.

In a scenario in which a data volume of a transmission object remains unchanged, each data section of the original data is split based on a quantity of segments that are directly specified in the attribute information, and the original data is divided into segments based on the quantity of segments that are directly specified in the attribute information. This eliminates load of redundant operation and logical judgment when a segmentation rule is determined based on specific attribute information, and improves universality of the segmentation rule formulated based on the attribute information.

According to the first aspect or any implementation of the first aspect, in a sixth possible implementation of the data transmission method, the data transmission method is applicable to a data transmission scenario of an intelligent cockpit. The at least one data source is a microphone array element in an in-vehicle microphone array; and the original data is noise data collected by the microphone array element.

The foregoing data transmission method is applied to the in-vehicle microphone array, so that noise data collected by each microphone array element of the microphone array can be properly split in a transmission process. In this way, each segment of noise data in a data packet form is relatively independently transmitted, and a possibility is provided for segmentation check, to provide guidance for screening as soon as possible when a transmission error occurs in a specific bit. This not only ensures a real-time requirement of noise data transmission, but also ensures accuracy of the noise data, so as to lay a foundation for timely calculation and transmission of a high-matched reverse noise signal.

According to a second aspect, this application provides a data transmission method, used to receive original data. The data transmission method includes: receiving a plurality of coded blocks, where each coded block includes one of a plurality of data sections and a check code for the data section, the plurality of data sections are obtained by segmenting original data from at least one data source, and the check code is calculated based on each of the plurality of data sections; performing, by using check codes included in the plurality of coded blocks, a check on data sections included in the plurality of coded blocks; and providing at least a data section that is successful in the check for a user of the original data.

For the original data from at least one data source, if some data sections are successful in the check and the other data sections fail the check, all data sections of the original data are not discarded, but at least those data sections that are successful in the check are provided to the user. In this way, even when some data sections of the original data fail to be transmitted, the user can still use data. This improves data transmission efficiency.

According to the second aspect, in a first possible implementation of the data transmission method, the providing for a user of the original data includes: setting a data section that fails the check to a specified bit value; concatenating the data section that is successful in the check and the data section that has been set to the specified bit value, to obtain concatenated data; and sending the original data to the user in a form of the concatenated data.

By resetting to the specified bit value, a data section that is not successfully recovered can be clearly distinguished from a data section that is successfully recovered, which facilitates quick identification of whether each data section is in a successfully recovered state. Additional indication information mentioned below does not even need to be sent to notify existence or a location of an error data section. In addition, a quantity of bits of the concatenated data formed by concatenating the data section that is successful in the check and the data section that has been set to the specified bit value is consistent with a quantity of bits occupied by the original data of the data source, and each data section used for concatenation also keeps corresponding to the original data of each data source in sequence. In this way, data processing at a same layer of a transmitting end and a receiving end is equivalent, which helps simplify resource scheduling in a wireless network to some extent.

According to the second aspect or the first implementation of the second aspect, in a second possible implementation of the data transmission method, the providing for a user of the original data includes: sending the data section that is successful in the check and first indication information to the user, where the first indication information indicates a corresponding sequence, in the original data, of the data section that fails the check.

In this implementation, the data section that fails the check is discarded, and only the data section that passes the check and a sequence number of the discarded data section are transmitted to the user, so that transmission of invalid information of the section that fails the check is reduced while available information is retained as much as possible, which facilitates further flexible processing by a later user based on a function and purpose of the data.

According to the second aspect or any implementation of the second aspect, in a third possible implementation of the data transmission method, the providing for a user of the original data includes: sending the data section that is successful in the check and second indication information to the user, where the second indication information indicates whether the data section that fails the check exists.

When a probability of mistransmission of data is low, the user may receive only the data section that is successfully recovered and learn whether a transmission error occurs in a current transmission process, without learning detailed information of the transmission error. In this way, space for caching data and time for determining a condition statement are saved.

According to the second aspect or any implementation of the second aspect, in a fourth possible implementation of the data transmission method, the performing a check on data sections included in the plurality of coded blocks and the providing for a user of the original data are implemented at a physical layer in an access layer protocol stack of a wireless network.

The physical layer is implemented on a bottom-layer hardware device, and the bottom-layer hardware device has a strong processing capability and can perform various operations faster. Therefore, performing a check at the physical layer and processing checked data separately based on different situations can reduce time overheads and improve data transmission efficiency.

According to the second aspect or any implementation of the second aspect, in a fifth possible implementation of the data transmission method, the data transmission method is also applicable to a data transmission scenario of an intelligent cockpit. The at least one data source is a microphone array element in an in-vehicle microphone array; and the original data is noise data collected by the microphone array element.

When the noise data can be segmented and each data section can be checked, a data packet of the entire noise data can be processed based on situations without discarding the entire data packet due to a check error in a specific data section. This avoids waiting for data retransmission, and improves efficiency and reliability of data transmission, so that timely and accurate noise data can be obtained as a basis, and a reverse noise signal that is highly matched with real noise can be calculated and generated.

According to a third aspect, this application provides a data transmission device, configured to transmit original data. The data transmission device includes a receiving module, a segmentation module, a calculation module, and a sending unit. The receiving module is configured to receive original data and attribute information of the original data that are from at least one data source. The segmentation module is configured to segment the data based on the attribute information to obtain a plurality of data sections. The calculation module is configured to calculate respective check codes for the plurality of data sections based on each of the plurality of data sections. The sending module is configured to send the original data in a form of a plurality of coded blocks. Each coded block corresponds to one data section in the plurality of data sections, and includes the data section and a corresponding check code.

According to the third aspect, in a first possible implementation of the data transmission device, the segmentation module and the calculation module are at a physical layer in an access layer protocol stack of a wireless network.

According to the third aspect or the first possible implementation of the third aspect, in a second possible implementation of the data transmission device, the attribute information includes a quantity of quantization bits used by each of the at least one data source.

When the quantity of quantization bits used by each data source is different, a quantity of bits of each of the plurality of data sections is the same as a quantity of quantization bits used by one of the at least one data source.

When the quantity of quantization bits used by each data source is the same, the quantity of bits of each data section may be equal to the same quantity of quantization bits.

According to the third aspect or any implementation of the third aspect, in a third possible implementation of the data transmission device, the attribute information includes at least a sampling rate and a quantity of quantization bits used by each of the at least one data source.

When the attribute information includes the sampling rate and the quantity of quantization bits used by each of the at least one data source, the quantity of bits of each of the plurality of data sections is a positive integer multiple of the quantity of quantization bits used by one of the at least one data source, or the quantity of quantization bits used by one of the at least one data source is a positive integer multiple of the quantity of bits of each of the data sections DSs.

According to the third aspect or the first or second implementation of the third aspect, in a fourth possible implementation of the data transmission device, the attribute information includes a quantity of the at least one data source.

In this way, a quantity of the plurality of data sections is a positive integer multiple of the quantity of the at least one data source, or the quantity of the at least one data source is a positive integer multiple of a quantity of the plurality of data sections.

According to the third aspect or any implementation of the third aspect, in a fifth possible implementation of the data transmission device, the attribute information includes quantity information of the plurality of data sections obtained by segmenting the original data.

In this way, the original data is divided into a specific quantity of segments based on the specific quantity of segments directly required in the attribute information.

According to the third aspect or any implementation of the third aspect, in a sixth possible implementation of the data transmission device, the at least one data source is a microphone array element in an in-vehicle microphone array; and the original data is noise data collected by the microphone array element.

For beneficial effects of the data transmission device in the third aspect, refer to beneficial effects of the data transmission method in the first aspect. Details are not described herein again.

According to a fourth aspect, this application provides a data transmission device, configured to receive original data. The data transmission device includes a receiving module, a check module, and a providing module. The receiving module is configured to receive a plurality of coded blocks. Each coded block includes one of a plurality of data sections and a check code for the data section. The plurality of data sections are obtained by segmenting original data from at least one data source, and the check code is calculated based on each of the plurality of data sections. The check module is configured to perform, by using check codes included in the plurality of coded blocks, a check on data sections included in the plurality of coded blocks. The providing module is configured to provide at least a data section that is successful in the check for a user of the original data.

According to the fourth aspect, in a first possible implementation of the data transmission device, the providing module further includes a setting unit, a concatenation unit, and a sending unit. The setting unit is configured to set a data section that fails the check to a specified bit value. The concatenation unit is configured to concatenate the data section that is successful in the check and the data section that has been set to the specified bit value, to obtain concatenated data. The sending unit is configured to send the original data to the user in a form of the concatenated data.

According to the fourth aspect or the first implementation of the fourth aspect, in a second possible implementation of the data transmission device, the providing module is configured to send the data section that is successful in the check and first indication information to the user, where the first indication information indicates a corresponding sequence, in the original data, of the data section that fails the check.

According to the fourth aspect or any implementation of the fourth aspect, in a third possible implementation of the data transmission device, the providing module is configured to send the data section that is successful in the check and second indication information to the user, where the second indication information indicates whether the data section that fails the check exists.

According to the fourth aspect or any implementation of the fourth aspect, in a fourth possible implementation of the data transmission device, the check module and/or the providing module are/is at a physical layer in an access layer protocol stack of a wireless network.

According to the fourth aspect or any implementation of the fourth aspect, in a fifth possible implementation of the data transmission device, the at least one data source is a microphone array element in an in-vehicle microphone array; and the original data is noise data collected by the microphone array element.

For beneficial effects of the data transmission device in the fourth aspect, refer to beneficial effects of the data transmission method in the second aspect. Details are not described herein again.

According to a fifth aspect, this application provides a transmitting device. The transmitting device includes a first communication interface, at least one first processor, and at least one first memory. The first communication interface is configured to communicate with another device. The at least one first memory stores a first program instruction. When the first program instruction is executed by the at least one first processor, the at least one first processor is enabled to perform the method in any one of the first aspect or the implementations of the first aspect.

According to the fifth aspect, in a possible implementation of the transmitting device, the transmitting device is an in-vehicle microphone array, and the microphone array further includes at least one microphone that serves as a data source, configured to sample a noise signal in a vehicle.

According to a sixth aspect, this application further provides a receiving device. The receiving device includes a second communication interface, at least one second processor, and at least one second memory. The second communication interface is configured to communicate with another device. The at least one second memory stores a second program instruction. When the second program instruction is executed by the at least one second processor, the at least one second processor is enabled to perform the method in any one of the second aspect or the implementations of the second aspect.

According to the sixth aspect, in a possible implementation of the receiving device, the receiving device is a cockpit domain controller, and the cockpit domain controller is further configured to generate a reverse noise signal by using at least a data section that is successful in a check.

According to a seventh aspect, this application provides a data transmission system. The data transmission system includes the transmitting device according to the fifth aspect or the foregoing possible implementation of the fifth aspect and the receiving device according to the sixth aspect and the foregoing possible implementation of the sixth aspect.

According to an eighth aspect, this application provides a computer-readable storage medium. The computer-readable storage medium stores program instructions. When the program instructions are executed by a computer, the computer is enabled to perform the method according to any one of the first aspect or implementations of the first aspect or according to any one of the second aspect or implementations of the second aspect.

According to a ninth aspect, this application provides a computer program, including program instructions. When the program instructions are executed by a computer, the computer is enabled to perform the method according to any one of the first aspect or implementations of the first aspect or according to any one of the second aspect or implementations of the second aspect.

According to a tenth aspect, this application provides a vehicle. The vehicle includes the data transmission system in the seventh aspect and a speaker. The transmitting device in the data transmission system is a microphone array, and the microphone array further includes at least one microphone that serves as a data source, configured to separately sample a noise signal in the vehicle. The receiving device in the data transmission system is a cockpit domain controller, and the cockpit domain controller is further configured to: generate a reverse noise signal by using at least a data section that is successful in a check, and provide the generated reverse noise signal to the speaker for playing.

According to the foregoing aspects of this application, when an error occurs in a specific bit in data, not all the data is discarded, but data that can be recovered is transmitted. This greatly improves data transmission efficiency.

These aspects and another aspect of this application will be clearer and easier to understand in descriptions of the following (a plurality of) embodiments.

### BRIEF DESCRIPTION OF DRAWINGS

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in this specification, content referred to by same reference numerals is also the same. Specific accompanying drawings are described as follows:
FIG. 1 is a schematic diagram of an example application scenario according to an embodiment of this application;
FIG. 2 is a schematic diagram of an architecture of an access layer protocol stack of a wireless network according to an embodiment of this application;
FIG. 3 is a flowchart of a data transmission method according to an embodiment of this application;
FIG. 4 is a flowchart of a data transmission method according to another embodiment of this application;
FIG. 5 is a schematic diagram of a structure of a data transmission device according to an embodiment of this application;
FIG. 6 is a schematic diagram of a structure of a data transmission device according to another embodiment of this application;
FIG. 7 is a schematic diagram of a providing module according to another embodiment of FIG. 6;
FIG. 8 is a schematic diagram of a structure of a transmitting device according to an embodiment of this application;
FIG. 9 is a schematic diagram of a structure of a receiving device according to an embodiment of this application;
FIG. 10 is a schematic diagram of a structure of a data transmission system according to an embodiment of this application;
FIG. 11 is a schematic diagram of a structure of a vehicle according to an embodiment of this application; and
FIG. 12 is a schematic diagram of performing data transmission in the example application scenario in FIG. 1 according to an embodiment of this application.

### DESCRIPTION OF EMBODIMENTS

Unless otherwise defined, all technical and scientific terms used in this specification have same meanings as those usually understood by a person skilled in the art of this application. In case of any inconsistency, the meaning described in this specification or the meaning obtained according to the content recorded in this specification shall be used. In addition, the terms used in this specification are merely for the purpose of describing embodiments of this application, but are not intended to limit this application.

In this application, a CDC (Cockpit Domain Controller) refers to a cockpit domain controller, which is also referred to as an in-vehicle infotainment, and is a domain controller of an intelligent cockpit of a vehicle.

Cyclic redundancy check (Cyclic Redundancy Check: CRC) is a channel coding technology in which a short fixed-bit check code is generated based on data such as a network data packet or a computer file, and is mainly used to detect or check an error that may occur after data transmission or storage.

An automatic repeat request (Automatic Repeat Request: ARQ) is a communication technology in which a receiver requests a sender to retransmit an error data packet to recover the error data packet. An ARQ triggering manner includes a time-based triggering manner, a quantity-based triggering manner, and a bit-based triggering manner. For a specific specification of the ARQ, refer to a related technical standard, for example, the 3GPP TS36.322 protocol and the 3GPP TS38.322 protocol.

Original data is data transmitted from an upper layer (an upper layer of a physical layer). The upper layer may be at least one of a media access layer, a link control layer, a data link layer, a network layer, a transport layer, and an application layer. The original data is also called service data in a specific application scenario. Optionally, the original data may be in a form of a packet (packet). Therefore, the original data is also referred to as a data packet or a data block (Transmission Block: TB) in a network protocol.

Attribute information is feature information of a data source and/or original data. In the following embodiments, the attribute information provides a segmentation basis and rule for data segmentation. The attribute information includes but is not limited to a quantity of data sources, a data volume of data, a data identifier, data collection information, and the like. The data collection information may have different aspects based on different service scenarios. For example, in the following active noise reduction service scenario, the data collection information includes but is not limited to a noise sampling rate, a quantity of quantization bits, sampling time, and the like.

A data section (Data Section: DS) is a data segment obtained by segmenting original data of at least one data source based on attribute information of the data.

A coded block (Coded Block: CB) is a data unit or a sub-data packet formed by separately adding a CRC code to each data section DS.

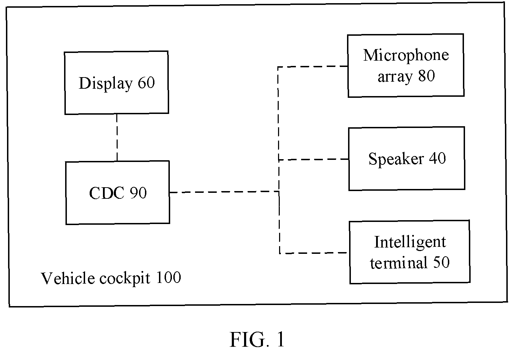

FIG. 1 is a schematic diagram of an example application scenario according to an embodiment of this application. A person skilled in the art should understand that the application scenario shown in FIG. 1 is merely one example scenario to which the solutions of this application are applicable. In addition to the application scenario shown in FIG. 1, the solutions in this application are further applicable to any other suitable application scenario, for example, but not limited to an indoor scenario like a home, an office, and an exhibition hall.

The example application scenario shown in FIG. 1 is a vehicle cockpit 100, which includes a speaker 40, a display 60, an intelligent terminal 50, a microphone array 80, and a CDC 90. For example, the CDC 90 may establish communication connections with the microphone array 80, the speaker 40, and the intelligent terminal 50 in a wired communication manner or a wireless communication manner. For example, the display 60 may be connected to the CDC 90 in a wired communication manner, a wireless communication manner, or the like. The intelligent terminal 50 may include, for example, but is not limited to, a mobile phone, a wearable device, and the like. The speaker 40 may include, for example, but is not limited to, an in-vehicle speaker and the like.

The microphone array 80 may include one or more microphones, and each microphone is one array element of the microphone array 80. Microphone array elements included in the microphone array 80 may be arranged in an array form, and the array form may be one or a combination of geometric arrays such as a linear array, a planar array (for example, a disk planar array), or a spatial array. The microphone array plays an important role in sound source localization, beamforming and dereverberation.

The vehicle cockpit 100 shown in FIG. 1 includes the microphone array 80, the speaker 40, and the display 60 as vehicle-mounted devices. However, a person skilled in the art should understand that the vehicle cockpit 100 may include more or fewer vehicle-mounted devices.

In the vehicle cockpit 100 shown in FIG. 1, the CDC 90 is a primary node, and the microphone array 80, the speaker 40, the display 60, and the intelligent terminal 50 are secondary nodes. The primary node allocates a resource to the secondary node. The secondary node listens to scheduling of the primary node and communicates with the primary node by using the resource allocated by the primary node.

The primary node and the secondary node indicate two types of nodes that are logically distinguished. The primary node manages the secondary node, has a resource allocation capability or a resource scheduling capability, and is responsible for scheduling a time-frequency resource for the secondary node. The secondary node listens to the scheduling of the primary node and communicates with the primary node by using the time-frequency resource scheduled by the primary node. The primary node and at least one secondary node form a communication domain. The at least one secondary node establishes a communication connection to the primary node, the primary node schedules a time-frequency resource for the at least one secondary node, and each secondary node communicates with the primary node by using the scheduled time-frequency resource. Specifically, the primary node may send resource scheduling signaling to the secondary node by using control signaling (for example, radio control signaling). The resource scheduling signaling includes a resource scheduled for the secondary node, and the secondary node sends data to the primary node by using the scheduled resource.

In a vehicle cockpit scenario, a vehicle-mounted active noise reduction service has low information transmission efficiency. Specifically, the microphone array 80 serving as a transmitting end considers noise data collected by each microphone array element of the microphone array 80 as a data packet, performs a CRC check on the data packet at a MAC layer to obtain a CRC code of the data packet, and then sends, through a wireless channel, the data packet and the CRC code of the data packet to the CDC 90 serving as a receiving end. After receiving the data packet and the CRC code of the data packet from the microphone array 80, the CDC 90 performs a CRC check on the received data packet at the MAC layer. If a specific bit in the data packet is incorrectly transmitted, the data packet fails the CRC check. In this case, the CDC 90 discards the entire data packet and initiates an ARQ mechanism to retransmit the data packet. The data packet is provided to a user only when all bits are successfully transmitted. After the ARQ mechanism is started, the receiving end usually receives a successfully transmitted data packet only after one or more times of retransmission. This process takes long time, resulting in low information transmission efficiency. It should be noted that being successful in the CRC check is generally referred to as passing the CRC check, and failing the CRC check is generally referred to as not passing the CRC check.

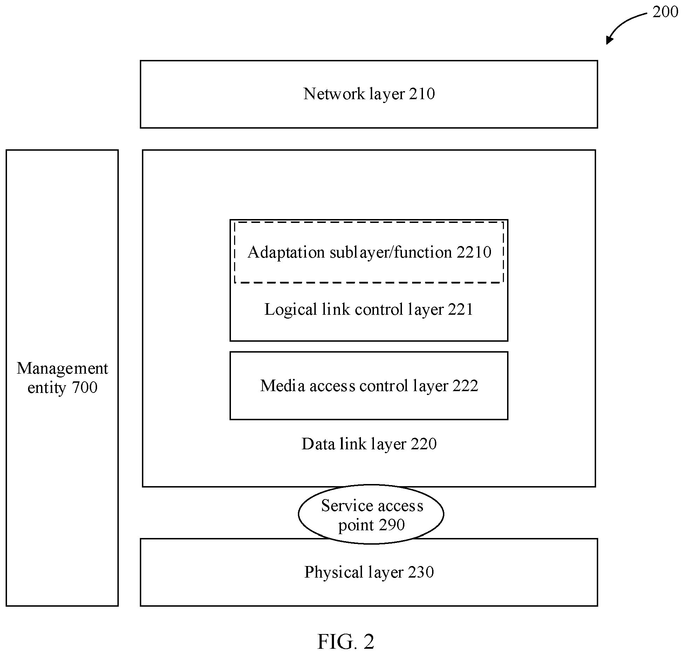

FIG. 2 is a schematic diagram of an architecture of an access layer protocol stack 200 of a wireless network according to an embodiment of this application.

As shown in FIG. 2, the protocol stack 200 of the wireless network includes a network layer 210, a data link layer 220, and a physical (PHY, Physical) layer 230. The network layer 210 is responsible for selecting a route to determine a path between two nodes. The network layer may further perform traffic control (for example, an IP protocol).

The data link layer 220 ensures reliable data transmission on a physical link. Data or an instruction is encapsulated into a specific frame that can be transmitted at the physical layer. Optionally, the data link layer further includes functions such as access control, resource management, data segmentation, concatenation, and error correction. The data link layer 220 includes a link control (LC, Link Control) layer 221 and a media access control (MAC, Media Access Control) layer 222. In this protocol stack architecture, an adaptation sublayer/function 2210 adapts at least a protocol stack type of the network layer 210 and a QoS parameter to a parameter identified by an access layer. A user plane includes the link control layer 221 and the media access control layer 222. The adaptation sublayer/function 2210 is a functional entity and is included in the link control layer 221. A management entity 700 performs a control plane management function by using resource control/management signaling. The resource control/management signaling is not sent through the adaptation sublayer/function 2210, but through a user plane protocol stack.

The physical layer 230 uses a transmission medium to provide a physical connection for the data link layer 220, and performs channel coding or decoding. The data link layer 220 is connected to the physical layer 230 through a service access point (Service Access Point: SAP) 290.

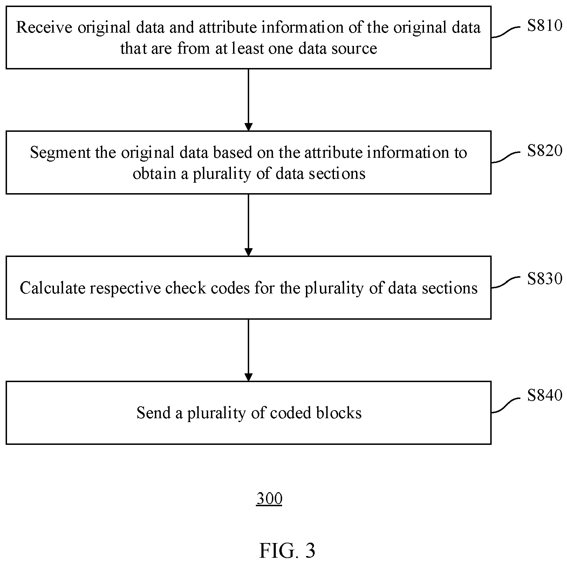

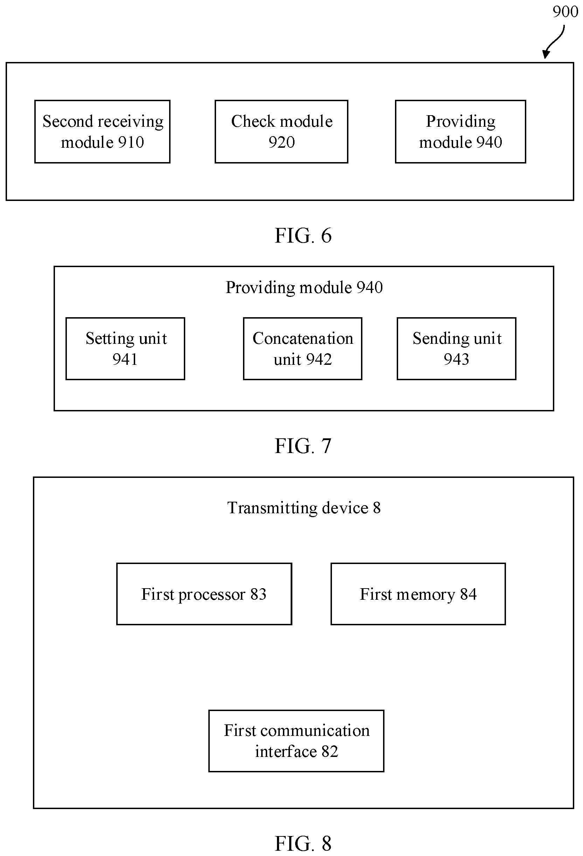

FIG. 3 is a flowchart of a data transmission method according to a first embodiment of this application. A method 300 shown in FIG. 3 is used to transmit original data, and may be implemented by a transmitting end, a transmitting device (refer to FIG. 8), or any other suitable device. The method 300 includes steps S810 to S840.

In step S810, original data TB and attribute information of the original data TB that are from at least one data source are received. The data source may be, for example, but is not limited to, a microphone array element in a microphone array in a vehicle cockpit. The original data TB may be, for example, but is not limited to, noise data collected by the microphone array element in the microphone array in the vehicle cockpit. For example, the attribute information of the original data TB may include but is not limited to a sampling rate and/or a quantity of quantization bits used by each microphone array element in the microphone array in the vehicle cockpit, a quantity of microphone array elements included in the microphone array, a quantity of data sections into which the original data is to be segmented, or the like.

In step S820, the original data TB is segmented based on the attribute information to obtain a plurality of data sections (Data Sections, DSs). Optionally, a correspondence between the plurality of data sections DSs and the at least one data source is maintained. Segmentation of the original data TB may be implemented at, for example, but not limited to, the physical layer 230, the MAC layer 222, or the like in the protocol stack 200 of the wireless network shown in FIG. 2.

In step S830, respective check codes for the plurality of data sections are calculated. Calculation of the check code for the data section may be implemented at, for example, but not limited to, the physical layer 230, the MAC layer 222, or the like in the protocol stack 200 of the wireless network shown in FIG. 2. The check code may include, for example, but is not limited to, a cyclic redundancy check (CRC) code, a parity code, or a Hamming code.

In step S840, the original data TB is sent in a form of a plurality of coded blocks CBs. Each coded block CB corresponds to one data section DS in the plurality of data sections DSs, and includes the data section DS and a corresponding check code.

According to the data transmission method in FIG. 3, the original data TB of the data source is further segmented based on the attribute information of the original data TB, and each data section is encoded and added with a check code for transmission. For example, assuming that N microphone array elements in the microphone array have a same quantity of quantization bits, the TB is segmented based on the quantity of quantization bits to generate N DSs, and each DS corresponds to one microphone array element. This reduces a risk that the original data is entirely discarded due to a transmission error of a specific bit. In addition, since each segmented data section can be associated with the attribute information, each data section has a possibility to correspond to the data source, and this is also beneficial to being independently checked in a segmentation manner, so that data from different data sources can be transmitted without interference with each other, to improve transmission efficiency.

In some embodiments, the segmentation of the original data TB in step S820 and the calculation of respective check codes for the plurality of data sections DSs in step S820 are implemented at the physical layer 230 in the protocol stack 200 of the wireless network shown in FIG. 2.

The physical layer is implemented on a bottom-layer hardware device, and the bottom-layer hardware device has a strong processing capability and can perform various operations faster. Therefore, performing original data segmentation and CRC code calculation at the physical layer can reduce time overheads of performing original data segmentation and CRC code calculation, and improve data transmission efficiency.

In some embodiments, the attribute information includes a quantity of quantization bits used by each of the at least one data source. This embodiment is for a case in which data sent by the transmitting end to a receiving end each time is data sampled by the data source for a single time. In this case, for example, but limited to, a quantity of bits of each of the plurality of data sections DSs is the same as a quantity of quantization bits used by one of the at least one data source. A person skilled in the art will understand that, if the quantity of quantization bits used by each of the at least one data source is the same, the attribute information may include only one quantity of quantization bits for the at least one data source, that is, the same quantity of quantization bits.

When the attribute information includes the quantity of quantization bits used by each of the at least one data source, it is possible to partition a length of the data section DS based on a data length of each data source and to make the data section DS correspond to data of the data source. For example, the quantity of bits of each of the plurality of data sections may be the same as the quantity of quantization bits used by one of the at least one data source, so that each data section DS includes at least a complete data sample of one of the data sources. In this way, if there is a situation at the receiving end that some data sections DSs are discarded because of failing a check, but other data sections DSs are provided to a user because of being successful in the check, the user can obtain complete data of at least part of the data source for use.

In some embodiments, the attribute information includes a sampling rate and a quantity of quantization bits used by each of the at least one data source. Generally, each data source transmits one piece of sample point data each time sampling is performed. Therefore, for example, for a single microphone array element, a data length of a sample point transmitted in a single time is equal to a quantity of quantization bits. Certainly, a plurality of times of sampled data may also be combined and sent. In this case, a resource scheduling time interval should be a positive integer multiple of a sampling time interval. In this way, for a single microphone array element, a length (represented by a quantity of bits) of data sent by the microphone array element is equal to a positive integer multiple of a quantity of quantized bits. In this case, "length of array element data sent by a single microphone array element each time" = resource scheduling time interval/sampling time interval × quantity of quantization bits. Therefore, in step S820, if the original data TB is segmented based on a sampling rate and a quantity of quantization bits of one of the data sources, it is possible to that a quantity of bits of a segmented data section DS = "length of data sent by a single microphone array element each time". That is, it may be expressed as: quantity of bits of a data section DS = resource scheduling time interval/sampling time interval × quantity of quantization bits. The sampling time interval is a reciprocal of the sampling rate. The resource scheduling time interval may be set by, for example, but not limited to, the physical layer 230 or the MAC layer 222 in the protocol stack 200 of the wireless network shown in FIG. 2. It may be understood that data sampled at one time may also be sent in a plurality of times, so that a sampling time interval is a positive integer multiple of a resource scheduling time interval. In this way, for a single microphone array element, a quantity of quantization bits of a segmented data section DS is equal to a positive integer multiple of a length of data sent by the single microphone array element.

In addition, if sampling rates and quantities of quantization bits between data sources are different, quantities of bits of the data sections DSs may also be different, that is, the original data TB is transmitted by using unequally-divided data sections DSs.

In some embodiments, the attribute information includes a quantity of the at least one data source. Therefore, the attribute information on which the segmentation is based becomes simple and direct, and further understanding of data features of the data source is not required. In this case, for example but not limited to, a quantity of the plurality of data sections DSs may be a positive integer multiple of the quantity of the at least one data source. For example, when each array element in the microphone array uses a same sampling rate and a same quantity of quantization bits, for example, but not limited to, a quantity of data sections DSs is twice a quantity of array elements, each data section DS accommodates half of array element data of one array element. A quantity of data sections DSs may also be three times, four times, or the like a quantity of array elements, and may be adapted based on a requirement and network performance. Certainly, it may be understood that the quantity of data sections DSs is the same as the quantity of array elements, that is, each data section DS contains array element data of one array element.

In addition, in a case in which the attribute information includes the quantity of the at least one data source, for example, but not limited to, the quantity of the at least one data source is a positive integer multiple of the quantity of the plurality of data sections DSs. For example, when each array element in the microphone array uses a same sampling rate and a same quantity of quantization bits, for example, but not limited to, the quantity of data sections DSs is 1/2 of the quantity of array elements, each data section DS can accommodate array element data of two array elements. The quantity of data sections DSs may also be 1/3, 1/4, or the like of the quantity of array elements, and may be adapted based on a requirement and network performance.

In some embodiments, the attribute information includes quantity information of the plurality of data sections DSs obtained by segmenting the original data TB. That is, the attribute information may directly include a quantity of segments, and indicates a quantity of segments into which the original data TB of the at least one data source is segmented.

For a scenario in which a data volume of a transmission object remains unchanged, segmenting is performed directly based on a quantity of segments in the attribute information, so that load of requiring parameters such as a sampling rate and a quantity of quantization bits in the attribute information to perform operation or logical determining can be eliminated.

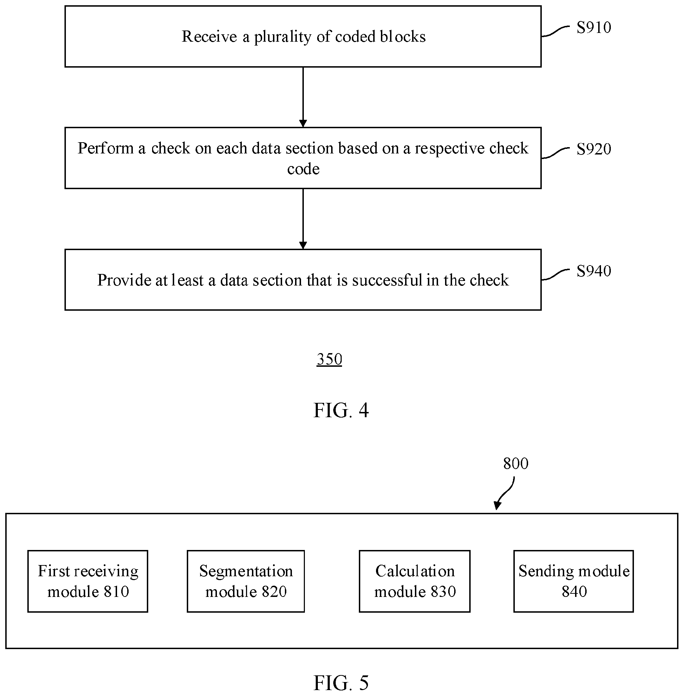

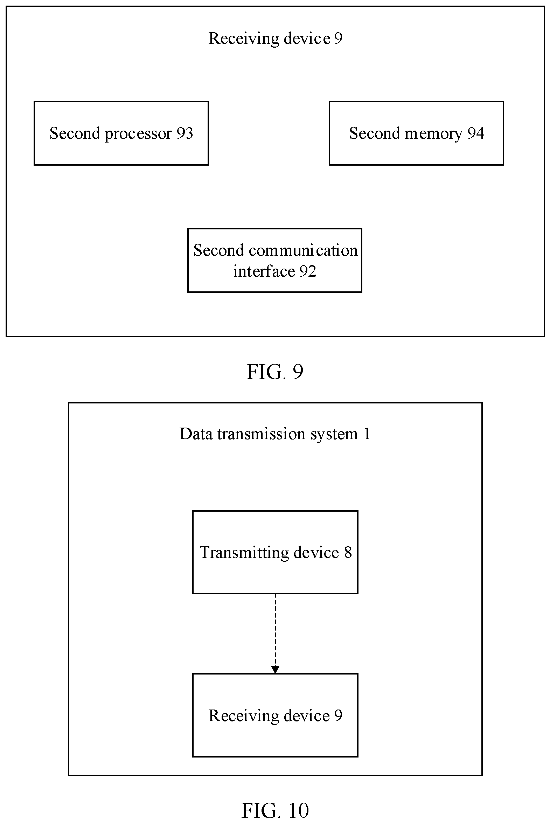

FIG. 4 is a flowchart of a data transmission method according to a second embodiment of this application. A method 350 shown in FIG. 4 is used to receive original data TB, and may be implemented by a receiving end, a receiving device (refer to FIG. 9), or any other suitable device. The method 350 includes steps S910 to S940.

In step S910, a plurality of coded blocks CBs are received. Each coded block CB includes one of a plurality of data sections DSs and a check code for the data section. The plurality of data sections DSs are obtained by segmenting original data TB from at least one data source. The plurality of coded blocks CBs are transmitted by a transmitting end, a transmitting device, or the like by radio. The data source may be, for example, but is not limited to, a microphone array element in the microphone array 80 in the vehicle cockpit 100. The original data TB may be, for example, but is not limited to, noise data collected by the microphone array element in the microphone array 80 in the vehicle cockpit 100. The check code may include, for example, but is not limited to, a cyclic redundancy check (CRC) code, a parity code, or a Hamming code.

In step S920, a check is performed on the data sections DSs included in the plurality of coded blocks CBs by using check codes included in the plurality of coded blocks CBs. The check on the data sections DSs may be implemented at, for example, but not limited to, the physical layer 230, the MAC layer 222, or the like in the protocol stack 200 of the wireless network shown in FIG. 2.

In step S940, at least a data section that is successful in the check is provided for a user of the original data. The user may be, for example, but is not limited to, an application or the like for generating anti-noise data to eliminate noise in a vehicle cockpit.

A check is performed on each data section DS. When a data section DS is successful in the check, the data section DS is recovered, that is, information about one or more data sources associated with the data section DS may be recovered, for example, noise sampling values of one or more microphone array elements may be included. In this embodiment, different processing modes are adopted for a data section DS that can be recovered and a data section DS that cannot be recovered, which are respectively as follows: For a data section DS that can pass the check, the data section DS is used as valid information for transmission. For a data section DS that does not pass the check, further processing is performed only for the data section that cannot be recovered, for example, the data section is optimized with a data section in an adjacent sequence, overwritten with a previous data section in the same sequence, or padded with a specified bit value; or the data section is even directly discarded. For a specific example, refer to the following description.

For the original data TB from at least one data source, if some data sections are successful in the check and the other data sections fail the check, all data sections of the original data TB are not discarded, but at least those data sections that are successful in the check are provided to the user. In this way, even when some data sections of the original data TB fail to be transmitted, the user can still use data. This improves data transmission efficiency.

In addition, in this embodiment, each data section DS is checked, and when a transmission error occurs in a small range, it is possible to continue to transmit data sections without errors separately, and impact of an error of a specific bit on the overall data transmission is minimized.

In an implementation, step S940 may further include: setting a data section DS that fails the check to a specified bit value; concatenating the data section that is successful in the check and the data section DS that has been set to the specified bit value, to obtain concatenated data TB ; and sending the original data to the user in a form of the concatenated data TB'.

The specified bit value may be, for example, but is not limited to, zero, one, or another agreed value like a default value. For example, the default value may be AFCF (hexadecimal). The data section DS that is successfully recovered and the data section DS that is not successfully recovered and replaced by the specified bit value can still be arranged and recombined according to a transmission sequence before the CRC check, so that the concatenated data TB' can be entirely transmitted in a form of a data packet TB as before the original data is segmented. Alternatively, the concatenation manner may be that the data section DS that is successfully recovered and the data section DS that is not successfully recovered and replaced by the specified bit value are arranged and recombined according to a sequence of segments in step S820, to facilitate data restoration.

When the concatenated data TB' is transmitted to the user, the concatenated data TB' includes not only the data section DS that is successfully recovered, but also the data section DS that fails to be recovered and is reset to the specified bit value.

When the data section DS that is not successfully recovered is reset to the specified bit value, the data section DS that is not successfully recovered can be clearly distinguished from the data section DS that is successfully recovered because data characteristics of the data section DS that is not successfully recovered represent its specificity and thus serve as a clear indication. In addition, a quantity of bits of the data packet formed by concatenating the data section that is successful in the check and the data section that has been set to the specified bit value is consistent with a quantity of bits occupied by the original data of the data source, and it is also possible that each data section DS used for concatenation keeps corresponding to the original data of each data source in sequence.

In some embodiments, step S940 may further include: sending the data section that is successful in the check and first indication information to the user, where the first indication information indicates a corresponding sequence, in the original data, of the data section that fails the check. The data section that fails the CRC check is discarded, and only the data section DS that passes the CRC check and a sequence number of the discarded data section are transmitted to the user. That is, the original data includes the data section that is successfully recovered and a sequence number corresponding to the "failed" data section. This avoids redundant transmission of invalid content in the data section that fails the check while retaining available information.

In some embodiments, step S940 may further include: sending the data section that is successful in the check and second indication information to the user, where the second indication information indicates whether the data section that fails the check exists. When a probability of mistransmission of data is low, the user may receive only the data section DS that is successfully recovered and learn whether a transmission error occurs in a current transmission process, without learning detailed information of the invalid content and a sequence number. In this way, space for caching data and time for determining a condition statement are saved.

In some embodiments, the performing a check on data sections included in the plurality of coded blocks and/or the providing for a user of the original data are/is implemented at the physical layer 230 in the access layer protocol stack 200 of the wireless network.

The foregoing describes in detail the method embodiments of this application with reference to FIG. 3 and FIG. 4, and the following describes device embodiments of this application with reference to FIG. 5 and FIG. 6. It should be understood that the descriptions of the method embodiments correspond to descriptions of the device embodiments. Therefore, for parts that are not described in detail in the device embodiments, refer to the descriptions in the foregoing method embodiments.

FIG. 5 is a schematic diagram of a data transmission device according to a first embodiment of this application. A data transmission device 800 shown in FIG. 5 is configured to transmit original data, and may be located in a transmitting end, a transmitting device (refer to FIG. 8), or any other suitable device.

As shown in FIG. 5, the data transmission device 800 includes a first receiving module 810, a segmentation module 820, a calculation module 830, and a sending module 840.

The first receiving module 810 is configured to receive original data TB and attribute information of the original data TB that are from at least one data source.

The segmentation module 820 is configured to segment the original data TB based on the attribute information to obtain a plurality of data sections DSs. A correspondence is maintained between the plurality of data sections DSs and the at least one data source.

The calculation module 830 is configured to calculate respective check codes for the plurality of data sections.

The sending module 840 is configured to send the original data TB in a form of a plurality of coded blocks CBs. Each coded block CB corresponds to one data section DS in the plurality of data sections DSs, and includes the data section DS and a corresponding check code.

In some embodiments, the segmentation module 820 and/or the calculation module 830 may be at the physical layer 230 in the access layer protocol stack 200 of the wireless network shown in FIG. 2.

In some embodiments, the attribute information used in the segmentation module 820 includes a quantity of quantization bits used by each of the at least one data source. For example, but not limited to, a quantity of bits of each of the plurality of data sections DSs is the same as a quantity of quantization bits used by one of the at least one data source.

In some embodiments, the attribute information used in the segmentation module 820 includes a sampling rate and a quantity of quantization bits used by each of the at least one data source. For example, but not limited to, the quantity of bits of each of the plurality of data sections DSs is a positive integer multiple of the quantity of quantization bits used by one of the at least one data source, or the quantity of quantization bits used by one of the at least one data source is a positive integer multiple of the quantity of bits of each of the data sections DSs.

In some embodiments, the attribute information used in the segmentation module 820 includes a quantity of the at least one data source. In this case, for example, but not limited to, a quantity of the plurality of data sections DSs is a positive integer multiple of the quantity of the at least one data source, or the quantity of the at least one data source is a positive integer multiple of a quantity of the plurality of data sections DSs.

In some embodiments, the attribute information used in the segmentation module 820 includes quantity information of the plurality of data sections DSs obtained by segmenting the original data.

FIG. 6 is a schematic diagram of a data transmission device according to a second embodiment of this application. A data transmission device 900 shown in FIG. 6 is configured to receive original data, and may be located in a receiving end, a receiving device (refer to FIG. 9), or any other suitable device.

As shown in FIG. 6, the data transmission device 900 includes a second receiving module 910, a check module 920, and a providing module 940.

The second receiving module 910 is configured to receive a plurality of coded blocks CBs. Each coded block CB includes one of a plurality of data sections DSs and a check code for the data section. The plurality of data sections DSs are obtained by segmenting original data TB from at least one data source.

In this embodiment, the plurality of coded blocks CBs received by the second receiving module 910 of the data transmission device 900 may come from the sending module 840 of the data transmission device 800 shown in FIG. 5.

The check module 920 is configured to perform, by using check codes included in the plurality of coded blocks CBs, a check on data sections DSs included in the plurality of coded blocks CBs.

The providing module 940 is configured to provide at least a data section DS that is successful in a check for a user of the original data TB. The user may be connected to the providing module 940 of the data transmission device 900 in this embodiment, to receive the original data TB.

In some embodiments, the check module 920 and/or the providing module 940 are/is disposed at the physical layer 230 in the access layer protocol stack 200 of the wireless network shown in FIG. 2.

In some embodiments, as shown in FIG. 7, the providing module 940 further includes a setting unit 941, a concatenation unit 942, and a sending unit 943.

The setting unit 941 is configured to set a data section DS that fails a check to a specified bit value.

The concatenation unit 942 is configured to concatenate a data section that is successful in a check and the data section DS that has been set to the specified bit value, to obtain concatenated data TB'.

The sending unit 943 is configured to send the original data TB to the user in a form of the concatenated data TB'.

In some embodiments, the providing module 940 is configured to send the data section DS that is successful in the check and first indication information to the user. The first indication information indicates a corresponding sequence, in the original data, of the data section DS that fails the check.

In some embodiments, the providing module 940 is configured to send the data section DS that is successful in the check and second indication information to the user. The second indication information indicates whether the data section DS that fails the check exists.

In some embodiments, the check module 920 and/or the providing module 940 are/is at the physical layer in the access layer protocol stack of the wireless network.

FIG. 8 is a schematic diagram of a transmitting device according to an embodiment of this application. As shown in FIG. 8, a transmitting device 8 includes a first communication interface 82, at least one first processor 83, and at least one first memory 84. The first memory 84 stores program instructions. When the program instructions are executed by the first processor 83, the first processor 83 is enabled to perform the data transmission method 300 shown in FIG. 3.

It should be understood that the first communication interface 82 is configured to communicate with another device.

The first memory 84 may be a storage unit inside the first processor 83, or may be an external storage unit independent of the first processor 83, or may be a component that includes a storage unit inside the first processor 83 and an external storage unit independent of the first processor 83.

It should be understood that in this embodiment of this application, the first processor 83 may be a central processing unit (central processing unit, CPU). The processor may be alternatively a general-purpose processor, a digital signal processor (digital signal processor, DSP), an application-specific integrated circuit (application-specific integrated circuit, ASIC), a field programmable gate array (field programmable gate Array, FPGA) or another programmable logic device, a discrete gate or transistor logic device, or a discrete hardware component. The general-purpose processor may be a microprocessor, or the processor may be any conventional processor or the like. Alternatively, the first processor 83 uses one or more integrated circuits, and is configured to execute related program instructions to implement the method and various implementations of the embodiment in FIG. 3.

The first memory 84 may include a read-only memory and a random access memory, and provide instructions and data for the first processor 83. A part of the first processor 83 may further include a nonvolatile random access memory. For example, the first processor 83 may further store information of a device type.

It should be noted that the transmitting device in this embodiment of this application may also be referred to as a transmitting terminal device or a transmitting terminal. The transmitting terminal may have a plurality of forms. This is not limited in this embodiment of this application. In a possible implementation, the transmitting terminal may be an independent device. In another possible implementation, the transmitting terminal may be integrated into another device as a function module or a chip apparatus.

The transmitting device may be a handheld device, a computing device, a vehicle-mounted device, or the like that has a wireless connection function, for example, but not limited to, a mobile phone, a tablet computer, a notebook computer, a handheld computer, a mobile internet device (mobile internet device, MID), a wearable device, a virtual reality (virtual reality, VR) device, an augmented reality (augmented reality, AR) device, a wireless terminal in self driving (self driving), a cellular phone, a cordless phone, a session initiation protocol (session initiation protocol, SIP) phone, a personal digital assistant (personal digital assistant, PDA), a terminal device in a 5G network, and the like. This is not limited in this embodiment of this application.

In a possible implementation, the transmitting device in this embodiment of this application may be a microphone or a microphone array in a vehicle-mounted device.

FIG. 9 is a schematic diagram of a receiving device according to an embodiment of this application. As shown in FIG. 9, a receiving device 9 includes a second communication interface 92, at least one second processor 93, and at least one second memory 94. The second memory 94 stores program instructions. When the program instructions are executed by the second processor 93, the second processor 93 is enabled to perform the data transmission method 350 shown in FIG. 4.

For descriptions of the second communication interface 92, the second processor 93, and the second memory 94, refer to the foregoing descriptions of the first communication interface 82, the first processor 83, and the first memory 84 in the transmitting device 8. When the receiving device 9 runs, the second processor 93 executes a second program instruction in the second memory 94, to implement the operation steps of the method in the embodiment in FIG. 4 and various implementations of the method.

It should be noted that the receiving device in this embodiment of this application may also be referred to as a receiving terminal device or a receiving terminal. The receiving terminal may have a plurality of forms. This is not limited in this embodiment of this application. In a possible implementation, the receiving terminal may be an independent device. In another possible implementation, the transmitting terminal and the receiving terminal may be separately integrated into another device as a function module or a chip apparatus.

The receiving device may be a base station, or a radio controller, or may be a relay station, an access point, a wearable device, an intelligent terminal of a user, a tablet computer, a Bluetooth headset, an access device in a 5G network, a network device in a future evolved public land mobile network (public land mobile network, PLMN), or the like, or may be an intelligent controller integrated or installed on a vehicle, for example, an electronic control unit (Electronic Control Unit, ECU), a domain controller (Domain Controller Unit, DCU), or a multi-domain controller (Multi-domain Controller, MDC).

In a possible implementation of this embodiment, the receiving device may be a cockpit domain controller.

Further, as shown in FIG. 10, in an embodiment, the transmitting device 8 and the receiving device 9 may be integrated into a data transmission system 1. That is, the data transmission system 1 includes both the transmitting device 8 in FIG. 8 and the receiving device 9 in FIG. 9. The receiving device and the transmitting device may communicate with each other in a plurality of manners. This is not limited in this embodiment of this application.

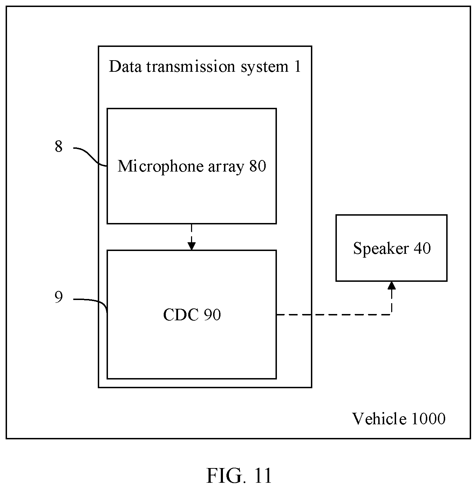

In this embodiment, a possible implementation of communication between the receiving device and the transmitting device is a wireless manner. The wireless manner may be to implement communication by using a communication network. The communication network may be a local area network, or may be a wide area network transferred by using a relay (relay) device, or may include a local area network and a wide area network. For example, when the communication network is a local area network, the communication network may be a short-range communication network like a Wi-Fi hotspot network, a Wi-Fi P2P network, a Bluetooth network, a ZigBee network, or a near field communication (near field communication, NFC) network. For example, when the communication network is a wide area network, the communication network may be a 3rd-generation mobile communication technology (3rd-generation wireless telephone technology, 3G) network, a 4th-generation mobile communication technology (the 4th-generation mobile communication technology, 4G) network, a 5th-generation mobile communication technology (5th-generation mobile communication technology, 5G) network, a PLMN, or the Internet. This is not limited in this embodiment of this application. According to the foregoing embodiments and with reference to an in-vehicle scenario, this application further provides a vehicle 1000 that includes the data transmission system 1 in FIG. 10. As shown in FIG. 11, the vehicle 1000 further includes the speaker 40. The transmitting device 8 in the data transmission system 1 may be the microphone array 80. The microphone array 80 further includes at least one microphone that serves as the data source, configured to separately sample a noise signal in the vehicle 1.

The receiving device 9 in the data transmission system 1 may be the CDC 90. The CDC 90 is further configured to: generate a reverse noise signal by using at least a data section DS that is successful in a check, and provide the generated reverse noise signal to the speaker 40 for playing.

It may be understood that the microphone array 80 and the transmitting device 8 may be integrated into a product. Alternatively, the in-vehicle microphone array 80 may be connected to the transmitting device 8 through separate communication lines.

Similarly, the CDC 90 and the receiving device 90 may be integrated into a product. Alternatively, the CDC 90 may be connected to the data transmission device 900 by using separate communication devices.

The following uses the application scenario shown in FIG. 1 as an example to describe, with reference to the accompanying drawings, an example of specific implementation of data transmission implemented by the data transmission system 1 in this application.

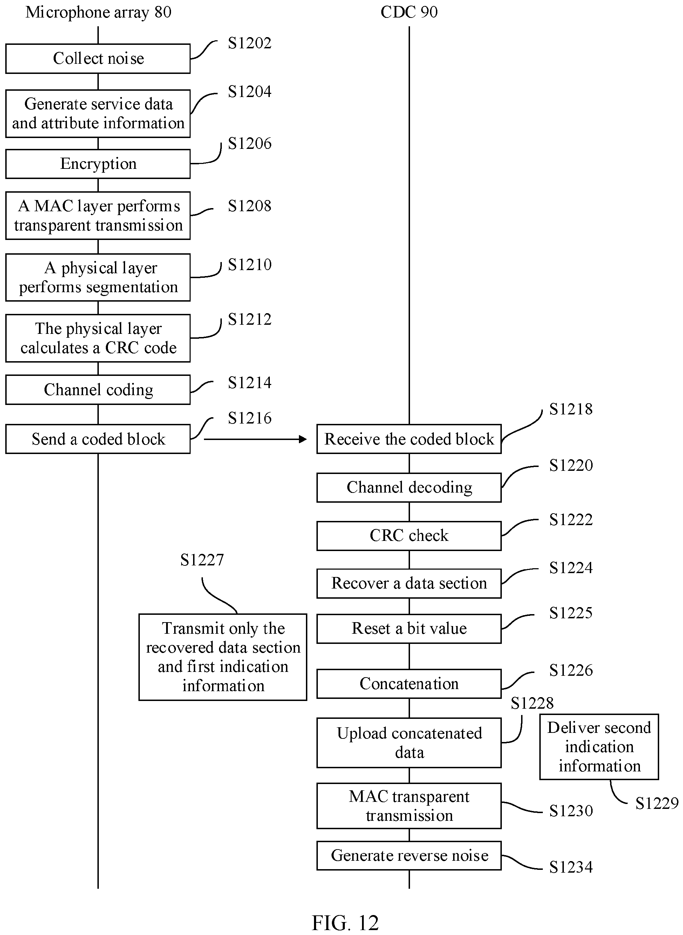

As shown in FIG. 12, in general, each microphone array element in the microphone array 80 collects noise information of a vehicle, and the microphone array aggregates all noise information and sends the information to the CDC 90 to generate a reverse noise signal to cancel noise of the vehicle.

Specifically, a microphone array 80 side may perform the following steps S1202 to S 1220.

In step S1202, each microphone array element in the microphone array 80 collects noise information of the vehicle at a specific sampling rate, and converts the collected noise information into a noise sampling value in a digital form by using a specific quantity of quantization bits. Sampling rates and quantities of quantization bits of all microphone array elements in the microphone array 80 may be the same or different.

In step S 1204, the microphone array 80 generates service data TB that includes a noise sampling value of each microphone array element and attribute information of the service data at one layer (for example, a network layer, a transport layer, a session layer, a presentation layer, or an application layer) above a data link layer in an OSI transmission model, and transmits the generated service data and the attribute information of the service data to the link control layer 221 of the data link layer 220 in the access layer protocol stack 200. Optionally, the service data may be, for example, in a form of a data packet. For example, but not limited to, when sampling rates and quantities of quantization bits of each microphone array element in the microphone array 80 are different, the attribute information may include, for example, a sampling rate fc like 48 kHz, 96 kHz, and 128 kHz and a quantity of quantization bits b like 16 bits, 24 bits, 32 bits, and 48 bits, of each microphone array element in the microphone array 80. For another example, but not limited to, when sampling rates fc and quantities of quantization bits b of all microphone array elements in the microphone array 80 are the same, the attribute information may include, for example, a quantity of microphone array elements in the microphone array 80. For another example, but not limited to, the attribute information may include a quantity of segments of the service data. It may be understood that, in each embodiment of this application, the attribute information may be obtained from a management entity through, for example, an upper layer of the data link layer 220 of the access layer protocol stack architecture 200, in a form of an inter-layer primitive. For a microphone array used to collect noise, the attribute information may include sampling rates fc and/or quantities of quantization bits b of one or more microphones for noise, or may include a number or name of each microphone, a quantity of bits occupied by bytes of noise data of each microphone, or the like.

In step S 1206, the link control layer 221 of the microphone array 80 encrypts the received service data TB, and sends encrypted service data TB and attribute information of the encrypted service data TB to the MAC layer 222 in the data link layer 220 of the microphone array 80. A person skilled in the art should understand that step S 1206 is optional, that is, after the service data and the attribute information of the service data are received, the link control layer 221 of the microphone array 80 may send the service data TB and the attribute information of the service data TB to the MAC layer 222 in the data link layer 220 without encrypting the service data TB.

In step S1208, after receiving the service data TB and the attribute information of the service data TB from the link control layer, the MAC layer 222 does not perform any processing on the service data TB and the attribute information of the service data TB, for example, does not add a CRC code or a packet header, and directly transmits the service data TB to the physical layer 230 of the microphone array 80. The MAC layer 230 may transmit the attribute information to the physical layer in, for example, but not limited to, the form of the inter-layer primitive through an inter-layer interface.

In contrast, after the entire original data TB is transmitted from an upper layer to the access layer protocol stack 200, a main function of the data link layer 220 is to ensure reliable data transmission on a physical link. Generally, data or an instruction is encapsulated into a specific frame that can be transmitted at the physical layer. Optionally, the data link layer further includes functions such as access control, resource management, data segmentation, concatenation, error correction, and data encryption/decryption. A main function of the physical layer 230 is to provide a physical connection for the data link layer by using a transmission medium, to implement transparent transmission (or transparent transmission for short) of a bit stream. Generally, channel coding or decoding is performed at the physical layer 230 to ensure data transmission reliability. Generally, the link control layer 221 is responsible for managing a transmission mode, including whether to perform an ARQ (Automatic Repeat-reQuest) status report, whether to segment data, whether to add a packet header, and the like; and may optionally perform encryption and decryption on the data. The MAC layer 222 is responsible for performing data encapsulation and adding a packet header based on fixed storage space resources, to generate a protocol data unit (PDU, Protocol Data Unit) of the MAC layer 222, that is, a MAC PDU. Optionally, for a format of the MAC PDU, refer to TS 36.321 or TS 38.321. Therefore, the MAC layer 222 adds a CRC check code to the entire encapsulated data TB, and then transmits the CRC check code to the physical layer, so that a receiving end performs a check on the original data TB.

In step S1210, the physical layer 230 of the microphone array 80 segments the received service data TB based on the attribute information of the service data TB, to obtain a plurality of data sections DSs.

It may be understood that the attribute information of the original data TB of the data source may also be associated. For example, array elements in the microphone array may use a same sampling rate fc and a same quantity of quantization bits b, or may use different sampling rates fc and a same quantity of quantization bits b. Because an amount of data collected by each microphone or a quantity of bits occupied by bytes of data is in direct proportion to both the sampling rate fc and the quantity of quantization bits b, if all array elements in the microphone array use a same sampling rate fc and a same quantity of quantization bits b, data amounts of noise data collected by all array elements are the same. In unit time, for example, 1 second, a quantity of bits B occupied by bytes of array element data of each array element is also the same, that is, B = fc × b/8, where 8 is a calculation parameter for converting binary numbers into bytes. Further, if all array elements in the microphone array use a same sampling rate fc and a same quantity of quantization bits b, a quantity of bits ΣB occupied by a sum of data amounts of all microphones in unit time is a product of a quantity of bits B occupied by bytes of data of each microphone in unit time and a quantity K of microphones, that is, ΣB = B × K = fc × b × K. Therefore, the attribute information used to segment the original data TB may be determined by performing a pre-operation or logical determining.

Therefore, it may be understood that the attribute information may further include any preset segmentation rule for the original data TB. For example, a segmentation rule for the original data TB of at least one data source may be equal division or unequal division. When segmentation is performed in an equal manner, a quantity of bits of each data section DS is equal, as described below in an implementation of equal division based on a quantity of quantization bits of each of a plurality of data sources or an implementation of equal division based on a unified quantity of quantization bits of a plurality of data sources. Certainly, it is also possible to perform equal division as required based on any preset quantity of bits or any quantity of segments. Certainly, it may be understood that, when amounts of resources obtained by the physical layer are not of a same size, the physical layer may alternatively transmit TB in an unequal division manner, to maximize utilization of an amount of physical resources.

The original data of the at least one data source is equally divided, so that each data section is equal in size. This facilitates storage and identification of the data section, and can provide neat matching and maintain transmission stability during resource scheduling.

When the microphone array elements in the microphone array use different sampling rates and quantities of quantization bits, the attribute information includes a plurality of sampling rates and quantities of quantization bits. For example, when the microphone array has eight array elements, that is, the quantity of data sources K = 8, for the first to fourth microphone array elements, a sampling rate fc is 48 kHz and a quantity of quantization bits b is 16 bits, and for the fifth to eighth microphone array elements, a sampling rate fc is 48 kHz and a quantity of quantization bits b is 24 bits. A quantity of bits of the segmented data section DS may be either 16 bits or 24 bits. For another example, a quantity of quantization bits b of the data of the first to third microphones is 24 bits, a quantity of quantization bits b of the data of the fourth to sixth microphones is 32 bits, and a quantity of quantization bits b of the data of the seventh and eighth microphones is 48 bits. A quantity of bits of the segmented data section DS may be one of 16 bits, 32 bits, and 48 bits. Specifically, how to determine the quantity of bits of the DS may depend on an algorithm used during implementation.

When the microphone array has K array elements, and all microphone array elements in the microphone array use a same sampling rate fc like 48 kHz, and a same quantity of quantization bits like 24 bits, the entire original data of the microphone array may be equally divided into M data sections DSs. The quantity M of the data sections DSs is a positive integer multiple of the quantity K of the microphone array elements, and Z is used to represent the positive integer. In this case, M = K × Z. Alternatively, the quantity K of the microphone array elements is a positive integer multiple of the quantity M of the plurality of data sections DSs, that is, K = M × Z. For example, if the quantity K of microphone array elements is 8, original data TB of a plurality of microphone array elements may be divided into 8 equal parts, a quantity of data sections DSs is 8, and a quantity of bits of each equally-divided data section DS is also 16 bits. That is, when K = M, a quantity of bits of each data section DS is the same as a quantity of bits of array element data of each array element. Alternatively, the original data TB may be divided into 4 equal parts, that is, a quantity of data sections DSs is 4, and a quantity of bits of each equally-divided data section DS is 32 bits, which is equivalent to that array element data of every two array elements forms one data section DS. Alternatively, the original data TB may be divided into 16 equal parts, that is, a quantity of data sections DSs is 16, and a quantity of bits of each equally-divided data section DS is 8 bits, which is equivalent to that every two data sections DSs carry array element data of one array element.

In this way, when a sampling rate fc of each data source is the same and a quantity of quantization bits b of each data source is the same, equal division is performed only based on the quantity K of data sources in the attribute information, so that storage and transmission of segmented data sections are more orderly, and a specific data source from which each data section DS comes can be more clearly defined. This further enhances a correlation between each data section DS and the data source, so that an array element fault in a microphone array can also be detected by detecting an error in an associated data section.

In step S1212, the physical layer 230 of the microphone array 80 calculates a CRC code for each data section DS to obtain a plurality of coded blocks CBs.

It may be understood that a plurality of array elements generally use a same sampling rate fc and a same quantity of quantization bits b. Assuming that a quantity of array elements in the attribute information transmitted by the MAC layer 222 is K, the physical layer 230 divides the original data TB into K equally-divided data segments, and adds a CRC check code to each equally-divided data section. In this case, each equally-divided data section corresponds to array element data of one array element.

Optionally, the physical layer 230 may alternatively divide the original data TB into M equal parts. For example, every two pieces of array element data form one data section.

In step S1214, channel coding is performed on each data section DS and CRC for transmission on a scheduled physical resource.

In step S1216, the plurality of coded blocks CBs are sent to a CDC side by using different physical resources.

As the receiving end, the CDC 90 side also uploads the received data layer by layer by using the architecture of the access layer protocol stack 200 of the wireless network in FIG. 2, until anti-noise data is obtained through calculation by using noise information carried in the data.

Specifically, the CDC 90 performs the following steps S1218 to S1234.

In step S1218, the physical layer 230 of the CDC 90 receives the plurality of coded blocks CBs from the microphone array 80 side.

In step S1220, the physical layer 230 of the CDC 90 performs channel decoding on coded blocks CBs from different physical resources.

In step S1222, the physical layer 230 of the CDC 90 performs a CRC check on data sections DSs by using respective CDC codes of the plurality of coded blocks CBs.

In step S1224, the physical layer 230 of the CDC 90 recovers a data section DS for a coded block that is successful in the CRC check. For a vehicle-mounted active noise reduction service, the successfully-recovered data section DS means that the CDC at the receiving end has obtained a noise sampling value of an associated array element of a microphone array at a transmitting end. In this embodiment, the physical layer 230 of the CDC 90 at least delivers the recovered data section DS.

For a coded block that does not pass the CRC check, there may be different feasible processing manners.

In a first feasible manner, in step S1225, the physical layer 230 of the CDC 90 resets a data section DS in the coded block that fails the CRC check to a specified bit value, for example, 0, 1, or a value agreed in another protocol.

In step S1226, the physical layer 230 of the CDC 90 concatenates the recovered data section DS in step S1224 and the unrecovered data section DS whose specified bit value is reset in step S 1225 to obtain concatenated data TB'.

At step S1228, the physical layer 230 of the CDC 90 delivers the concatenated data TB' to a user, for example, the MAC layer 222 of the CDC 90.

In a second feasible manner, steps S1225, S1226, and S 1228 are not performed, but step S1227 is performed. The physical layer 230 of the CDC 90 transmits only the successfully-recovered data section DS to the MAC layer 222 of the CDC 90, and sends first indication information, to indicate a relative sequence number of the unrecovered data section DS to the MAC layer 222.

Since a sequence number of the "failed" data section is still delivered, an upper layer user can locate a position of a data segment that has been emptied due to discarding. This facilitates further processing by the user selectively or separately based on a function and purpose of the data. In addition to the transparent transmission, decryption, conversion, and calculation mentioned above, further processing includes but is not limited to notification, display, optimization, and the like. Embodiments in which optimization is used as a mode of processing include overwriting the emptied data segment with a data section under a sequence number adjacent to the sequence number of the "failed" data section or overwriting the emptied data segment with a data section that was most recently successfully transmitted under the sequence number of the "failed" data section.

After step S 1227 is performed, the further processing may also include: re-padding a data segment at a position corresponding to the sequence number with a specified bit value, concatenating the data section DS that is successful in the CRC check and the data section DS that has been set to the specified bit value, and sending the concatenated data. However, the further processing may not be performed by the physical layer 230 in steps S1225, S1226, and S1228, but may be performed by the upper layer user.

In addition, in a third feasible manner, in step S 1229, the physical layer 230 of the CDC 90 further delivers second indication information to the MAC layer 222 of the CDC 90, to indicate whether unrecovered segmentation information is included.

It may be understood that the first feasible manner, the second feasible manner, and the third feasible manner may be arbitrarily combined.

In step S1230, the MAC layer 222 of the CDC 90 transparently transmits the data from the physical layer 230 of the CDC 90 directly to the link control layer 221 of the CDC 90.

When the microphone array 80 performs optional step S1206, the CDC 90 performs step S1232. The link control layer 221 of the CDC 90 decrypts the data transparently transmitted by the MAC layer 222 of the CDC 90, and then continues to deliver the decrypted data to the upper layer.

In step 1234, the data processing unit located at the upper layer of the CDC 90 converts the received data representing noise information through, for example, digital/analog conversion to generate a reverse noise signal and transmits the reverse noise signal to a speaker (not shown in the figure) for playing.

According to this embodiment of this application, when an error occurs in a specific bit of data TB from at least one data source during transmission, the entire data TB is not discarded, but at least a successfully-recovered data section DS of the data TB is delivered to an upper layer. This improves information transmission effectiveness, increases an information amount, and reduces a data loss. In a vehicle-mounted active noise reduction service, availability of information of each array element in a microphone or a microphone array can be ensured.

It should be noted that a meaning of a user using original data should be broadly understood, for example, the user may include not only one or more layers in an interconnection model of a wireless network system, for example, the MAC layer 20 used for transparently transmit the original data, or the link control layer 21 used for decrypting the original data in an access layer protocol stack 5; and may further include any base station, like a controller and a user, configured to obtain a signal of a data source based on the original data, for example, a device that converts the original data into a noise sample value and further calculates a reverse noise signal in an active noise reduction service, for example, the CDC 90. Even a subject that receives the sent original data and further processes the original data may be referred to as the user of the original data.

It may be understood that, in this embodiment, only one access layer protocol stack 200 of the wireless network shown in FIG. 2 is provided. Optionally, above the data link layer 220 may be any layer or multiple layers (for example, a network layer, a transport layer, a session layer, a presentation layer, or an application layer) in an open system interconnection (OSI, Open System Interconnect Reference Model) reference model transmission model. This is not limited in this application.

It may be understood that, the data transmission system 1 of the vehicle 1000 shown in FIG. 10 may be all located in the intelligent cockpit 100 in FIG. 1, but a need for distributed arrangement should not be excluded. For example, to collect engine noise, the microphone array 80 may be located near a chassis outside the cockpit.

According to the data transmission method, device, and system, and a related application technology that are provided in this application, when an error occurs in a specific bit in data, not all the data is discarded, but data that can be recovered is transmitted. This increases effectiveness of information carried in the transmitted data while ensuring a data transmission speed, ensures data availability of a data source, and increases an information volume, so that high reliability of data transmission can be met especially in a vehicle cockpit domain service.

Similar terms such as "first, second, and third" in the specification and claims are only used to distinguish between similar objects, and do not represent a specific order for objects. It may be understood that a specific order or sequence may be exchanged if allowed, so that embodiments of this application described herein can be implemented in an order other than that illustrated or described herein.

In the following descriptions, involved reference numerals such as S810 and S820 that indicate steps do not necessarily indicate that the steps are to be performed based on the order, and consecutive steps may be transposed if allowed, or may be performed simultaneously.

The terms "include" and "comprise" used in this specification and claims should not be construed as being limited to the content listed below, and do not exclude other elements or steps. Therefore, it should be construed as specifying existence of a mentioned feature, whole, step, or part, but does not preclude existence or addition of one or more other features, wholes, steps, or parts and their groups.

"One embodiment" or "an embodiment" mentioned in this specification indicates that a particular feature, structure or property that is described with reference to the embodiment is included in at least one embodiment of this application. Therefore, the terms "in one embodiment" or "in an embodiment" that appear in this specification do not necessarily indicate a same embodiment, but may indicate a same embodiment. Further, in one or more embodiments, the particular features, structures, or properties can be combined in any proper manner, as will be clear from this disclosure to a person of ordinary skill in the art.

A person of ordinary skill in the art may be aware that, in combination with the examples described in embodiments disclosed in this specification, units and steps of methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computing device (which may be a personal computer, a server, a network device, or the like) to perform all or some of the steps of the methods described in embodiments of this application. The storage medium includes any medium that can store program code, like a USB flash drive, a removable hard disk, a read-only memory (Read-Only Memory, ROM), a random access memory (Random Access Memory, RAM), a magnetic disk, or a compact disc.

An embodiment of this application further provides a computer-readable storage medium. The computer-readable storage medium stores a computer program. When being executed by a processor, the program is used to perform a diversified problem generation method. The method includes at least one of the solutions described in the foregoing embodiments.

The computer storage medium according to this embodiment of this application may be any combination of one or more computer-readable media. The computer-readable medium may be a computer-readable signal medium or a computer-readable storage medium. The computer-readable storage medium may be but is not limited to an electric, magnetic, optical, electromagnetic, infrared, or semiconductor system, apparatus, or device, or any combination thereof. More specific examples (a non-exhaustive list) of the computer-readable storage medium include an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In this document, the computer-readable storage medium may be any tangible medium including or storing a program that may be used by an instruction execution system, apparatus, or device, or be used in combination with an instruction execution system, apparatus, or device.

The computer-readable signal medium may include a data signal propagated in a baseband or propagated as part of a carrier, where the data signal carries computer-readable program code. Such a propagated data signal may take a variety of forms, including but not limited to an electromagnetic signal, an optical signal, or any suitable combination thereof. The computer-readable signal medium may alternatively be any computer-readable medium other than the computer-readable storage medium. The computer-readable medium may send, propagate, or transmit the program used by the instruction execution system, apparatus, or device, or used in combination with the instruction execution system, apparatus, or device.

The program code included in the computer-readable medium may be transmitted by using any suitable medium, including but not limited to Wi-Fi, a wire, an optical cable, RF, and the like, or any suitable combination thereof.

Computer program code for performing the operations in this application may be written in one or more programming languages, or a combination thereof. The programming languages include an object-oriented programming language, like Java, Smalltalk, and C++, and also include a conventional procedural programming language, like a "C" language or a similar programming language. The program code may be executed entirely on a user computer, or some may be executed on a user computer as a separate software package, or some may be executed on a user computer while some is executed on a remote computer, or the code may be entirely executed on a remote computer or a server. When a remote computer is involved, the remote computer may be connected to a user computer by using any type of network, including a local area network (LAN) or a wide area network (WAN), or may be connected to an external computer (for example, connected by using an Internet service provider through the Internet).

It should be noted that the foregoing are merely example embodiments of this application and used technical principles. A person skilled in the art may understand that this application is not limited to specific embodiments described herein, and a person skilled in the art may make various obvious changes, readjustments, and replacements without departing from the protection scope of this application. Therefore, although this application is described in detail with reference to the foregoing embodiments, this application is not limited to the foregoing embodiments. More other equivalent embodiments may be included without departing from the concept of this application, and all fall within the protection scope of this application.

## Claims

1. A data transmission method, wherein the data transmission method is used to transmit original data, and comprises:
receiving original data and attribute information of the original data that are from at least one data source;
segmenting the original data based on the attribute information to obtain a plurality of data sections;
calculating respective check codes for the plurality of data sections based on each of the plurality of data sections; and
sending the original data in a form of a plurality of coded blocks, wherein each coded block corresponds to one data section in the plurality of data sections, and comprises the data section and a corresponding check code.

2. The data transmission method according to claim 1, wherein
the segmenting the original data and the calculating respective check codes for the plurality of data sections are implemented at a physical layer in an access layer protocol stack of a wireless network.

3. The data transmission method according to claim 1 or 2, wherein
the attribute information comprises a quantity of quantization bits used by each of the at least one data source.

4. The data transmission method according to claim 1 or 2, wherein
the attribute information comprises a sampling rate and a quantity of quantization bits used by each of the at least one data source.

5. The data transmission method according to claim 1 or 2, wherein
the attribute information comprises a quantity of the at least one data source.

6. The data transmission method according to claim 1 or 2, wherein
the attribute information comprises quantity information of the plurality of data sections obtained by segmenting the original data.

7. The data transmission method according to any one of claims 1 to 6, wherein
the at least one data source is a microphone array element in an in-vehicle microphone array; and
the original data is noise data collected by the microphone array element.

8. A data transmission method, wherein the data transmission method is used to receive original data, and comprises:
receiving a plurality of coded blocks, wherein each coded block comprises one of a plurality of data sections and a check code for the data section, the plurality of data sections are obtained by segmenting original data from at least one data source, and the check code is calculated based on each of the plurality of data sections;
performing, by using check codes comprised in the plurality of coded blocks, a check on data sections comprised in the plurality of coded blocks; and
providing at least a data section that is successful in the check for a user of the original data.

9. The data transmission method according to claim 8, wherein the providing for a user of the original data comprises:
setting a data section that fails the check to a specified bit value;
concatenating the data section that is successful in the check and the data section that has been set to the specified bit value, to obtain concatenated data; and
sending the original data in a form of the concatenated data to the user.

10. The data transmission method according to claim 9, wherein the providing for a user of the original data comprises:
sending the data section that is successful in the check and first indication information to the user, wherein the first indication information indicates a corresponding sequence, in the original data, of the data section that fails the check.

11. The data transmission method according to any one of claims 8 to 10, wherein the providing for a user of the original data comprises:
sending the data section that is successful in the check and second indication information to the user, wherein the second indication information indicates whether the data section that fails the check exists.

12. The data transmission method according to any one of claims 8 to 11, wherein
the performing a check on data sections comprised in the plurality of coded blocks and the providing for a user of the original data are implemented at a physical layer in an access layer protocol stack of a wireless network.

13. The data transmission method according to any one of claims 8 to 12, wherein
the at least one data source is a microphone array element in an in-vehicle microphone array; and
the original data is noise data collected by the microphone array element.

14. A data transmission device, wherein the data transmission device is configured to transmit original data, and comprises:
a receiving module, configured to receive original data and attribute information of the original data that are from at least one data source;
a segmentation module, configured to segment the original data based on the attribute information to obtain a plurality of data sections;
a calculation module, configured to calculate respective check codes for the plurality of data sections based on each of the plurality of data sections; and
a sending module, configured to send the original data in a form of a plurality of coded blocks, wherein each coded block corresponds to one data section in the plurality of data sections, and comprises the data section and a corresponding check code.

15. The data transmission device according to claim 14, wherein
the segmentation module and the calculation module are at a physical layer in an access layer protocol stack of a wireless network.

16. The data transmission device according to claim 14 or 15, wherein
the attribute information comprises a quantity of quantization bits used by each of the at least one data source.

17. The data transmission device according to claim 14 or 15, wherein
the attribute information comprises a sampling rate and a quantity of quantization bits used by each of the at least one data source.

18. The data transmission device according to claim 14 or 15, wherein
the attribute information comprises a quantity of the at least one data source.

19. The data transmission device according to claim 14 or 15, wherein
the attribute information comprises quantity information of the plurality of data sections obtained by segmenting the original data.

20. The data transmission device according to any one of claims 14 to 19, wherein
the at least one data source is a microphone array element in an in-vehicle microphone array; and
the original data is noise data collected by the microphone array element.

21. A data transmission device, wherein the data transmission device is configured to receive original data, and comprises:
a receiving module, configured to receive a plurality of coded blocks, wherein each coded block comprises one of a plurality of data sections and a check code for the data section, the plurality of data sections are obtained by segmenting original data from at least one data source, and the check code is calculated based on each of the plurality of data sections;
a check module, configured to perform, by using check codes comprised in the plurality of coded blocks, a check on data sections comprised in the plurality of coded blocks; and
a providing module, configured to provide at least a data section that is successful in the check for a user of the original data.

22. The data transmission device according to claim 21, wherein the providing module further comprises:
a setting unit, configured to set a data section that fails the check to a specified bit value;
a concatenation unit, configured to concatenate the data section that is successful in the check and the data section that has been set to the specified bit value, to obtain concatenated data; and
a sending unit, configured to send the original data to the user in a form of the concatenated data.

23. The data transmission device according to claim 21, wherein the providing module is configured to send the data section that is successful in the check and first indication information to the user, wherein the first indication information indicates a corresponding sequence, in the original data, of the data section that fails the check.

24. The data transmission device according to any one of claims 21 to 23, wherein the providing module is configured to send the data section that is successful in the check and second indication information to the user, wherein the second indication information indicates whether the data section that fails the check exists.

25. The data transmission device according to any one of claims 21 to 23, wherein
the check module and the providing module are at a physical layer in an access layer protocol stack of a wireless network.

26. The data transmission device according to any one of claims 21 to 25, wherein
the at least one data source is a microphone array element in an in-vehicle microphone array; and
the original data is noise data collected by the microphone array element.

27. A transmitting device, comprising:
a first communication interface, configured to communicate with another device;
at least one first processor; and
at least one first memory, wherein the at least one first memory stores a first program instruction, and when the first program instruction is executed by the at least one first processor, the at least one first processor is enabled to perform the method according to any one of claims 1 to 7.

28. The transmitting device according to claim 27, wherein
the transmitting device is an in-vehicle microphone array, and the microphone array further comprises at least one microphone array element that serves as a data source, configured to sample a noise signal in a cockpit.

29. A receiving device, comprising:
a second communication interface, configured to communicate with another device; at least one second processor; and
at least one second memory, wherein the at least one second memory stores a second program instruction, and when the second program instruction is executed by the at least one second processor, the at least one second processor is enabled to perform the method according to any one of claims 8 to 13.

30. The receiving device according to claim 29, wherein
the receiving device is a cockpit domain controller, and the cockpit domain controller is further configured to generate a reverse noise signal by using at least a data section that is successful in a check.

31. A data transmission system, comprising:
the transmitting device according to claim 27 or 28; and
the receiving device according to claim 29 or 30.

32. A computer-readable storage medium, wherein the computer-readable storage medium stores program instructions, and when the program instructions are executed by a computer, the computer is enabled to perform the method according to any one of claims 1 to 13.

33. A computer program, comprising program instructions, wherein when the program instructions are executed by a computer, the computer is enabled to perform the method according to any one of claims 1 to 13.
